# EUROPEAN PATENT SPECIFICATION

(11) **EP 1 679 344 B1**
(45) Date of publication and mention of the grant of the patent: **17.12.2008**
(21) Application number: 05112714.0
(22) Date of filing: 22.12.2005
(51) Int. Cl.: C08L 23/16, C08L 23/30, F16G 5/08, F16G 1/10

(54) **Power transmission belts having enhanced properties**
Treibriemen mit verbesserten Eigenschaften
Courroie de transmission avec propriétés améliorées

(30) Priority: 31.12.2004 US 26769; 30.11.2005 US 290332
(43) Date of publication of application: 12.07.2006
(73) Proprietor: Veyance Technologies, Inc., Fairlawn, OH 44333-3023 (US)
(72) Inventor: Burrowes, Thomas George, 68506, Lincoln (US); Gregg, Michael John William, 68502, Lincoln (US)
(74) Representative: Hellwig, Tillmann Johannes

(56) References cited:
- EP-A- 1 030 226
- EP-A- 1 108 750
- EP-A- 1 205 515
- EP-A- 1 241 379
- EP-A- 1 300 442
- EP-A- 1 469 032
- DE-A1- 4 220 773
- US-A1- 2005 096 433
- US-B1- 6 251 977

## Description

### Background of the invention

The present invention is directed to improved ethylene-alpha-olefin elastomers, especially EPDM-based elastomers, for use in manufacturing power transmission products, such as power transmission belts, timing belts, and the like. More specifically, the invention is directed to such elastomers which incorporate certain types of functionalized polyethylenes which result in belts having enhanced physical properties.

Proposals have already been made on numerous occasions to use EPDM (ethylene propylene diene terpolymer) elastomers cured by organic peroxides in the manufacture of power transmission belts, because of the qualities and advantages of such elastomers such as cost, operating temperature range, and ability to withstand oxygen and ozone, such EPDM-based elastomers having additives which improve their dynamic properties such as resistance to fatigue and to wear, their breaking strength, and their modulus of elasticity, and also their adhesion to traction cords, which additives are generally constituted by metallic salts of α,β-unsaturated organic acids (in particular zinc methacrylate) plus reinforcing fillers such as carbon black and possibly fibers, e.g. aramid fibers. For example, US-B- 5,610,217 teaches the use of α,β-unsaturated organic acids in peroxide cured EPDM elastomers. US-B- 6,251,977 teaches the inclusion, in peroxide cured elastomers, of an elastomer grafted with maleic anhydride which reacts with the α,β-unsaturated organic acid metallic salt included in the composition to reinforce the curing of the EPDM-based elastomer and to improve its dynamic characteristics, such as in particular its modulus of elasticity, its breaking strength, and its hardness. The elastomer grafted with maleic anhydride can be a polybutadiene, polyisoprene, polypropylene, or an ethyl vinyl acetate (EVA) copolymer, and the elastomer is used as a power transmission belt.

Oxidized polyethylenes are known and are taught by US-B- 2,683,141 and US-B- 3,060,163. They are used to form stable, translucent emulsions for use in floor waxes, in coatings for asbestos shingles, paper and textiles, and in inks for application to various surfaces. They have been incorporated into thermoplastic polypropylene compositions containing EPDM compositions, such as those described in US-B- 4,990,568. In this patent, a thermoplastic polypropylene is modified with EPM or EPDM and an oxidized or carboxylated polyolefin, in at an amount of 2 to 20% of the elastomer, to improve the problem of adherence of coatings applied to the surfaces of articles formed from the thermoplastic elastomers.

EP-A 1 108 750 describes an ethylene-alpha-olefin elastomere composition for power transmission belts also comprising a rubber selected from ethylene-vinylacetate copolymer, ethylenemethacrylate copolymers and terpolymers, chlorinated polyethylene, chlorosulfonated polyethylene and alkylated chlorosulfonated polyethylene, the composition being of a high quality, withstanding the conditions of high load, high tensions and high temperatures and also meeting consumer's demand for longer lasting belts.

EP-A 1 300 442 is a further document describing an elastomeric composition on the basis of an ethylene-alpha-olefin elastomere and further comprising the above indicated funtionalized polyethylenes.

EP-A 1 205 515 describes a further elastomeric composition on the basis of ethylene-alpha-olefin elastomere, which serves as the primary elastomere, the elastomere composition also comprising a metal salt of an α-β-unsaturated organic acid and a reinforcing filler.

EP-A 1 030 226 describes an elastomeric composition for a transport belt containing an alkylated chlorosulfonated polyethylene rubber.

DE-A 42 20 773 describes a polymer composition comprising an ethylene-vinylacetate-copolymer and further thermoplastic or elastomeric polymers.

US 2005/0096433 describes a power transmission belt made of a rubber component comprising an ethylene-vinyl ester copolymer and/or an ethylene-α-β-unsaturated carboxylate copolymer and an ethylene-alpha-olefin rubber.

EP-A 1 241 379 is a further document describing a rubber composition for a power transmission belt comprising an ethylene-alpha-olefin elastomere and an ethylene-vinyl-acetate copolymer, ethylene-methacrylate copolymers and terpolymers, chlorinated polyethylene, chlorosulfonated polyethylene or alkylated chlorosulfonated polyethylene.

EP-A 1 469 032 describes a further elastomeric rubber composition for power transmission belts on the basis of an ethylene-alpha-olefin elastomere.

### Summary of the invention

The present invention is the result of the discovery that the incorporation of an oxidized polyethylene or a copolymer of polyethylene and maleic anhydride into ethylene alpha olefin elastomers, such as EPDM elastomer compositions, which are cured by peroxides, will result in improved properties, such as hardness and modulus of elongation, and can result in improved higher abrasion resistance, wear resistance, coefficient of friction, tensile strength, and other properties over a wide temperature range. Enhancement of these properties is beneficial to power transmission products, such as power transmission belts. Further, the formulation results in a reduction in the viscosity of the uncured compound, resulting in easier processing.

For the purposes of this application, the "total crosslinkable material" in the rubber composition is used as the basis for the "parts per hundred rubber" (phr) calculation. The quantity of crosslinkable polyethylene in the compound is included in the phr amount. Cross-linkable material is herein defined as a material in a composition that chemically links with other material within the composition. For the purpose of this definition, co-agents and co-cures, such as peroxide, zinc methacrylate, zinc diacrylate, bismaleimide, are not considered cross-linkable materials. Cross-linkable materials include conventional solid elastomers, liquid elastomers, and cross-linkable thermoplastic resins or waxes.

The incorporation of an oxidized polyethylene or a copolymer of polyethylene and maleic anhydride is at an amount of 1% to 95%, with 5% to 95%, 5% to 80% and 20% to 80% by weight of the crosslinkable material being more preferred ranges. When the composition is cured by the peroxide that is included in the mixture, the functionalized polyethylene is also crosslinked into the composition, and the result is an improved belting composition.

The high ethylene content, which is beneficial in improving the pilling and wear resistance of the ribs in, e.g., v-ribbed belts, is currently achieved using ethylene alpha olefin base elastomers with high ethylene levels, i.e., elastomers having ethylene levels of greater than 65%. Such compositions are difficult to process on conventional rubber processing equipment. The process of the present invention allows for use of easy processing low ethylene base elastomers in which the ethylene content is boosted by the functionalized polyethylene, allows the use of smaller amounts of high ethylene elastomer, and enables the increase in low extension modulus of the compound. Thus, the belt properties are improved without a negative impact on processing.

### Brief description of the drawings

Fig. 1 is a differential scanning calorimeter graph of the exotherms of uncured versus cured compounds of a composition containing functionalized polyethylene;
Fig. 2 is a differential scanning calorimeter graph, similar to Fig. 1, of the exotherms of uncured versus cured compounds of a composition containing another functionalized polyethylene;

### Detailed description of the invention

The present invention is directed to improved power transmission products, such as transmission belts, timing belts, and the like. The invention will be described with reference to power transmission belts, but could be applied to other structures, and so are not limited thereto. The structures of power transmission belts are well know and illustrated in patents such as US-B-6,251,977, US-B- 6,561,937, and US-B- 5,610,217. The belt is designed to rotate any rotary member, and can be of the "poly-V" type. As such it would have an inside surface and a certain number of circumferential ribs of trapezoidal cross-section, where the ribs are mutually parallel and extend over the entire length of the belt and are designed to be engaged in grooves of complementary shape in the pulleys on which the belt is mounted.

The belt has at least one sheet of traction cords which are embedded in the ethylene-alpha-olefin elastomer of the belt, between its top surface and the ribs, with the cords being spiral-wound inside the belt and with the number of turns thereof being a function of the mechanical characteristics desired of the belt.

The ethylene-alpha-olefin elastomers useful in the present invention include but are not limited to copolymers composed of ethylene and propylene units (EPM), ethylene and butene units, ethylene and pentene units, or ethylene and octene units (EOM), and terpolymers composed of ethylene and propylene units and an unsaturated component (EPDM), as well as mixtures thereof. As the unsaturated component of EPDM, any appropriate non-conjugated diene may be used, including for example, 1,4-hexadiene, dicyclopentadiene or ethylidenenorbornene (ENB). The ethylene-alpha-olefin elastomer preferred in the present invention contains from 35% by weight to 80% by weight of the ethylene unit, from 65% by weight to 25% by weight of the propylene or octene unit, and 0-10% by weight of the unsaturated component. In a more preferred embodiment, the ethylene-alpha-olefin elastomer contains from 55% to 78% by weight of the ethylene unit, and in a most preferred embodiment, the ethylene-alpha-olefin elastomer contains from 65% to 75% of the ethylene unit. At these more preferred ethylene unit content levels, endless belts incorporating as their main belt body portions the ethylene-alpha-olefin elastomeric compositions of this preferred embodiment of the present invention exhibit improved pilling resistance. The most preferred ethylene-alpha-olefin elastomers are EPM and/or EPDM.

To form the elastomer composition of the present invention the ethylene-alpha-olefin elastomer may optionally be blended with less than 50% by weight, more preferably up to 25%, and most preferably from 5% to 10% based on the total crosslinkable material of a second elastomeric material including but not limited to silicone rubber, polychloroprene, epichlorohydrin, hydrogenated nitrile butadiene rubber, natural rubber, ethylene-vinyl-acetate copolymer, ethylene methacrylate copolymers and terpolymers, styrene butadiene rubber, nitrile rubber, chlorinated polyethylene, chlorosulfonated polyethylene, alkylated chlorosulfonated polyethylene, transpolyoctenamer, polyacrylic rubbers, butadiene rubber, and mixtures thereof, to fine-tune certain mechanical properties such as high temperature performance and tack. For example, the composition of the elastomer of the invention may also be blended with:
hydrogenated nitrile butadiene rubber (HNBR) constituting 2 to 20 phr approximately to improve resistance to oils and to solvents, or nitrile butadiene rubber (NBR) in the same quantities and for the same purpose;
polybutadiene (BR) constituting 2 to 20 phr approximately to improve dynamic properties and resistance to abrasion;
chloro-sulfonated polyethylene with alkyl groups (ACSM) constituting 2 to 40 phr approximately to increase resistance to oils and resistance to tearing; and
natural rubber comprising about 2 to 20 phr to improve raw adhesion.

The elastomer may incorporate metal salts of α,β-unsaturated organic acids. The metal salts of α,β-unsaturated organic acids that can be useful in the present invention are metal salts of acids such as for example, acrylic, methacrylic, maleic, fumaric, ethacrylic, vinyl-acrylic, itaconic, methyl itaconic, aconitic, methyl aconitic, crotonic, α-methylcrotonic, cinnamic, and 2,4-dihydroxy cinnamic acids. These salts may be of zinc, cadmium, calcium, magnesium, sodium or aluminum, and are preferably those of zinc. The preferred metal salts of α,β-unsaturated organic acids are zinc diacrylate and zinc dimethacrylate. The most preferred metal salt of unsaturated organic acid is zinc dimethacrylate. Amounts of the metal salt useful in the present invention may range from 1 to 30 phr, and are preferably from 5 to 20 phr. In the most preferred embodiment, the metal salt is zinc dimethacrylate used in an amount of 5 phr when used in conjunction with EPDM mixed with up to 10% of silicone rubber, and from 10 to 20 phr and more preferably 15 phr when used in conjunction with the other ethylene-alpha-olefin elastomers useful in the present invention.

The functionalized polyethylenes that is employed in the present invention include oxidized polyethylenes and copolymers of polyethylene, and maleic anhydride, which will crosslink with the elastomer to increase the hardness and modulus of the elastomer, which in turn, leads to improved belt properties, especially for power transmission belts. Functionalized polyethylenes are available from Honeywell International Inc. under the brand name A-C® polyethylene, including A-C® 307, 307A, 395, and 395A, which are oxidized polyethylenes, and A-C® 575P and 575A, which are ethylene-maleic anhydride copolymers.

Oxidized polyethylene wax materials suitable for use in the practice of this invention are described in US-B- 2,683,141 and US-B- 3,060,163. According to the latter patent, normally solid, hard, waxy polymers of ethylene having an average molecular weight between 1,000 and 3,000 are subjected, in the liquid phase, to the action of an oxygen-containing gas to cause reaction of between 2-17 pounds of oxygen per 100 pounds of wax, i.e. to provide an oxidized polyethylene wax containing at least 1 percent and preferably 1-8 percent by weight of oxygen, and acid numbers of not more than 50, and preferably between 10 and 45.

The oxidized polyethylene is characterized by having a minimum number average molecular weight above 1000 and preferably at least 1200, as determined by high temperature vapor pressure osmometry, containing between 1-5 percent by weight of total oxygen, and having an acid number of from 10 to 35. The described oxidized polyethylene is obtained by oxidation of polyethylene in molten or finely divided solid form, with free oxygen containing gas, usually air, generally at elevated temperature, until the desired oxygen content is obtained. Starting materials for making the oxidized polyethylene suitable for use in the practice of this invention include low molecular weight, low density or linear low density polyethylene waxes having specific gravities in the range of 0.91 to 0.96 as, for example, prepared by the process described in US-B- 2,683,141, as well as high density, linear polyethylene as, for example, prepared in the presence of such well know catalysts as the "Phillips" or "Ziegler" type catalysts, having specific gravities in the range of 0.93-0.97 or above. The low molecular weight, low density polyethylene starting material can be oxidized by contacting in the molten state with a stream of air until the desired oxygen content has been obtained. The high density, linear polyethylene starting material is usually oxidized by contact, preferably in the finely divided solid state, with free oxygen-containing gas, usually air, at temperatures ranging from 100°C up to, but not including, the crystalline melting point of the polyethylene, until the desired oxygen content has been obtained.

The ethylene-alpha-olefin elastomeric compositions useful in the endless belts of the present invention further comprise from 25 to 250 phr and preferably from 25 to 100 phr of a reinforcing filler such as carbon black, calcium carbonate, talc, clay or hydrated silica, or mixtures of the foregoing. If desired, the incorporation of from 1 to 30 phr of a metal salt of an unsaturated organic acid and from 25 to 250 phr, preferably 25 to 100 phr, of reinforcing filler in the peroxide-cured ethylene-alpha-olefin elastomeric composition preserves the heat stability of conventional peroxide-cured elastomers, while providing the tear strength and dynamic properties usually associated with sulfur cured elastomers.

The elastomeric composition may contain from 0.1 to 40 phr of an acrylated polybutadiene. Preferably, from 1 to 10 phr is present. The polybutadiene may be a random polybutadiene polymer containing both 1,4 and 1,2 butadiene units. The amount of 1,2 vinyl bonds may range from 15 to 90 percent by weight of the acrylated polybutadiene. Preferably, from 20 to 70 percent by weight of 1,2 vinyl bonds are present. The acrylated polybutadiene may be prepared from a Ziegler Natta polymerization. The acrylated polybutadiene may have a molecular weight (M_{N}) ranging from 500 to 500,000. Preferably, the molecular weight ranges from 1,000 to 70,000. Preferred acrylated polybutadienes are sold by Sartomer Company, Inc., under the trademark RICACRYL. A specific example is RICACRYL 3500 (mol weight M_{N} of approximately 6400 and a Brookfield viscosity of approximately 50,000 centipoise). Acrylated polybutadienes may be used with acrylates and methacrylates, e.g., trimethylolpropane trimethacrylate (TMPTMA), which is available as SR® 350 from Sartomer Company, Inc., in amounts of from 0.1 to 50 phr (preferably 1-20 phr) to make up a coagent system. Other examples are set forth in US-B- 6,491,598.

The free-radical producing curatives useful in the present invention are those suitable for curing ethylene-alpha-olefin elastomers and include for example, organic peroxides and ionizing radiation. The preferred curative is an organic peroxide, including but not limited to dicumyl peroxide, bis-(t-butyl peroxy-diisopropyl benzene, t-butyl perbenzoate, di-t-butyl peroxide, 2,5-dimethyl-2,5-di-t-butylperoxyhexane, α-α-bis(t-butylperoxy) diisopropylbenzene. The preferred organic peroxide curative is α-α-bis(t-butylperoxy) diisopropylbenzene. Cure-effective amounts of organic peroxide for purposes of the present invention are typically from 2 to 15 phr. Preferred levels of organic peroxide are from 4 to 12 phr. Sulfur may optionally be added to the organic peroxide curative as part of a mixed cure system in an amount of from 0.01 to 1.0 phr, to improve the cured elastomer's Young's modulus without negatively affecting its tear resistance.

Other conventional ethylene-alpha-olefin elastomer additives, process and extender oils, antioxidants, waxes, pigments, plasticizers, softeners and the like may be added according to common rubber processing practice without departing from the present invention. For example, in a preferred embodiment of the present invention, the elastomeric composition also contains from 0.5 to 1.5 phr of an antiozonant or antioxidant and from 5 to 15 phr of a paraffinic petroleum oil plasticizer/softener.

The ethylene-alpha-olefin elastomeric compositions useful in the present invention may be prepared by any conventional procedure such as for example, by mixing and milling the ingredients in an internal mixer or mill. It should be noted that in blending some of the functionalized polyethylenes, attaining temperatures above the melting point of the polyethylene grade may be necessary to achieve processing of the mixed materials, and thus a uniform blend.

Typically, a belt made out of an EPDM elastomer of the invention has the following composition prior to curing:
EPDM: 99 to 20 % by weight of the total crosslinkable material;
functionalized polyethylene: 1 to 80 % (preferable: 5 to 70 %) by weight of the total crosslinkable material;
carbon black: 5 to 100 phr (preferably: 50 to 60 phr);
electrically conductive carbon black: 0 to 15 phr (preferably: 5 to 10 phr);
antioxidant: 0.5 to 8 phr (preferably: 1.5 to 3 phr);
organic peroxide: 0.5 to 15 phr (preferably: 2 to 12 phr);
curing coagent: 0.5 to 10 phr (1 to 8 phr);
plasticizer: 0 to 20 phr (preferably: 1 to 10 phr).

In addition, it may also have polyamide, aramid, polyester, rayon, cotton, carbon, or glass fibers constituting 3 to 30 phr approximately to improve the tensile and low extension modulus.

### Example

In order to demonstrate the present invention, belt compositions were made and tested. The following composition was mixed and compounded in a two stage Banbury mixer in a manner typical for rubber compounding:
EPDM: 84.4 % by weight of crosslinkable material;
functionalized polyethylene: 15.6 % by weight of crosslinkable material;
carbon black: 42 phr;
dicumyl peroxide: 8.4 phr
The compositions were made into sheets, cured at 340°F, for 30 minutes, and evaluated using the Rubber Processability Analyzer and physical properties on cured samples using ASTM procedures. The results are set forth in Tables I and II.

**Table I**

| Example No. | Functionalized polyethylene employed | sg (g/cc) | Mettler drop point (°F) | RPA 2000 Rubber process analyzer "Cure" data | | |
|---|---|---|---|---|---|---|
| | | | | Min S' (dNm) | Max S' (dNm) | Max S' - Min S' (dNm) |
| 1 | none | | | 3.266 | 34.96 | 31.70 |
| 2 | A-C® 307A Oxidized polyethylene | 0.98 | 284 | 2.32 | 31.76 | 29.44 |
| 3 | A-C® 395A Oxidized polyethylene | 1.00 | 279 | 2.33 | 25.31 | 22.98 |
| 4 | A-C® 575A Ethylene-maleic anhydride copolymer | 0.92 | 223 | 2.239 | 27.11 | 24.87 |

| | | | | | | |
|---|---|---|---|---|---|---|
| Note: A-C® polyethylenes & copolymers are available from Honeywell International, Inc. | | | | | | |

**TABLE II**

| Test | Control | A-C® 575A Example | A-C® 307A Example |
|---|---|---|---|
| Tensile strength; | 1460.3 | 1392.8 | 1667.8 |
| Psi (MPa) | (10.1 MPa) | (9.6) | (11.5) |
| Elongation (%) | 141 | 175 | 156 |
| Modulus (MPa) | | | |
| 10%; | 64.9 | 116.5 | 203.9 |
| Psi | (0.45 MPa) | (0.8) | (1.41) |
| 25% | 138.7 | 215.5 | 343.2 |
| | (0.96) | (1.48) | (2.37) |
| 50% | 246.2 | 322.3 | 492.7 |
| | (1.70) | (2.22) | (3.4) |
| 100% | 712.9 | 609.3 | 903.8 |
| | (4.92) | (4.2) | (6.23) |
| 141% | 1460.3 | | |
| | (10.1) | | |
| 156% | | | 1667.8 |
| | | | (11.5) |
| 175% | | 1392.8 | |
| | | (9.6) | |
| Hardness | 66 | 73 | 80 |
| (Shore A) | | | |

From the data above, the blends have lowered S'min (indicator of improved processing). Tensile strength, elongation, modulus, hardness are increased resulting in a more useful compound.

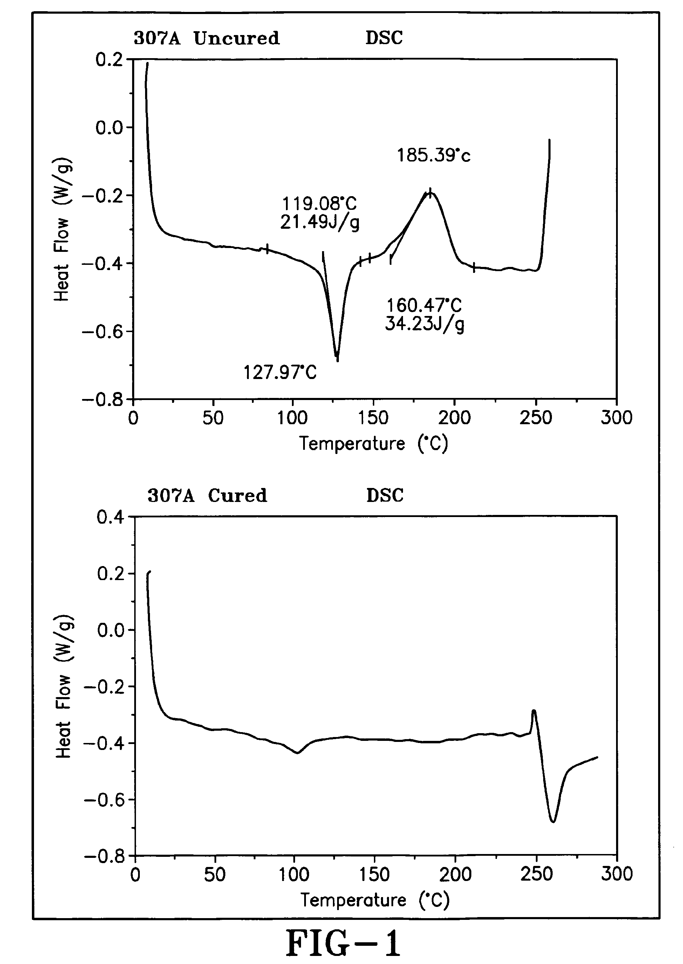

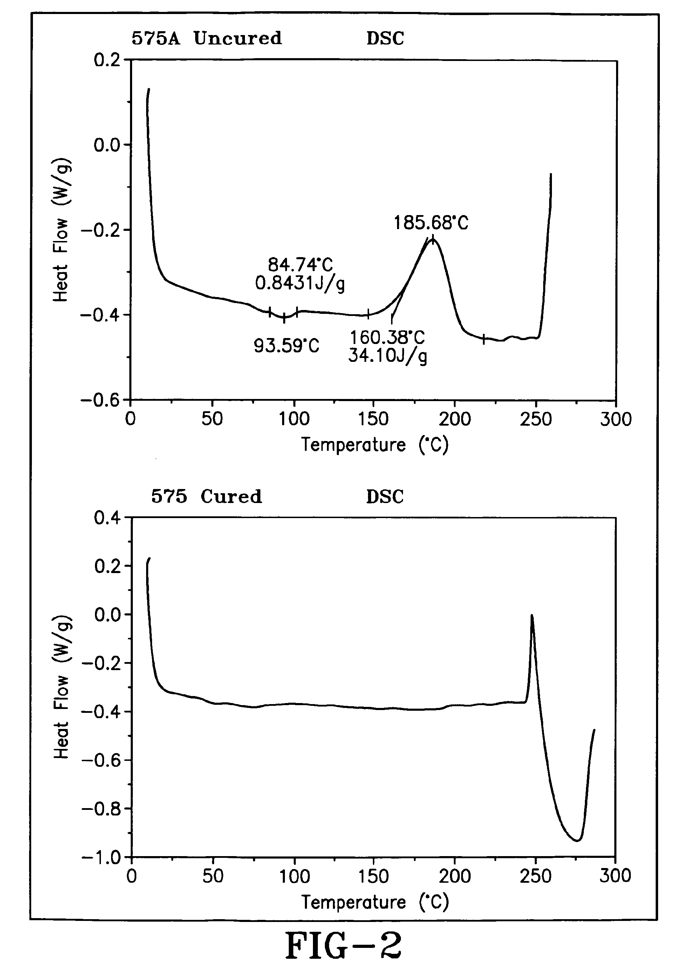

As can be seen from the data above and the DSC (differential scanning calorimeter) scans shown in Figures 1 and 2, the functionalized polyethylene is crosslinked with the EPDM. The resulting composition would provide improved properties for the belting material.

The DSC scans of uncured A-C® 307A compound, Fig. 1, and A-C® 575A compound, Fig. 2, show melt point peaks for the functionalized polyethylenes at 127.97°C and 93.59°C respectively, along with the DiCup cure exotherm at 185-186°C. The same melt point peaks are absent from the DSC scans of cured samples of these compounds and show that the functionalized polyethylenes are crosslinked into the compounds on cure.

## Claims

1. An organic peroxide curable elastomer composition comprising:
ethylene-alpha-olefin elastomer, and
an organic peroxide curing agent,
**characterized in that** the composition contains an oxidized polyethylene or a copolymer of polyethylene and maleic anhydride in an amount of 1 to 95 % by weight based upon the total weight of crosslinkable material.

2. The elastomer composition of claim 1, wherein the ethylene-alpha-olefin elastomer is selected from ethylene-propylene-diene copolymer, ethylenepropylene-diene terpolymer, or mixtures thereof.

3. The elastomer composition of at least one of the previous claims, wherein the oxidized polyethylene or the copolymer of polyethylene and maleic anhydride is present in an amount of 1 to 80% by weight based upon the total weight of crosslinkable material.

4. The elastomer composition of at least one of the previous claims, wherein the oxidized polyethylene or the copolymer of polyethylene and maleic anhydride is present in an amount of 20 to 80% by weight based upon the total weight of crosslinkable material.

5. The elastomer composition of at least one of the previous claims, wherein the cured compound is in the form of a power transmission belt selected from the group consisting of synchronous belts, v-belts, and multi-V-ribbed belts.

6. The elastomer composition of at least one of the previous claims, wherein the composition further includes a filler and/or a reinforcing fiber.

7. The elastomer composition of at least one of the previous claims, wherein the uncured composition comprises:
(a) ethylene-alpha-olefin elastomer in an amount of 5% to 99% by weight of the total crosslinkable material,
(b) an oxidized polyethylene or a copolymer of polyethylene and maleic anhydride in an amount of 1% to 95% by weight of the total crosslinkable material, and
(c) 2 to 15 phr of the organic peroxide curing agent.

8. A power transmission belt, the belt comprising an elastomeric body having at least one cord or fabric layer, **characterized in that** the body comprises an organic peroxide curable elastomer composition including:
(a) ethylene-alpha-olefin elastomer,
(b) an organic peroxide curing agent, and
(c) an oxidized polyethylene or a copolymer of polyethylene and maleic anhydride in an amount of 1 to 95 % by weight based upon the total weight of crosslinkable material.

## Patentansprüche

1. Organische, peroxid-härtbare Elastomerzusammensetzung aus
einem Ethylen-alpha-Olefinelastomer und
einem organischen Peroxid-Härter,
**dadurch gekennzeichnet, dass** die Zusammensetzung ein oxidiertes Polyethylen bzw. ein Copolymer aus Polyethylen und Maleinsäureanhydrid in einer Menge von 1 bis 95 Gew.-% bezogen auf das Gesamtgewicht des vernetzbaren Materials enthält.

2. Elastomerzusammensetzung nach Anspruch 1, bei der das Ethylen-alpha-Olefinelastomer ausgewählt ist aus Ethylen-Propylen-Dien-Copolymer, Ethylen-Propylen-Dien-Terpolymer oder Mischungen davon.

3. Elastomerzusammensetzung nach mindestens einem der vorangegangenen Ansprüche, bei der das oxidierte Polyethylen bzw. das Copolymer aus Polyethylen und Maleinsäureanhydrid in einer Menge von 1 bis 80 Gew.-% bezogen auf das Gesamtgewicht des vernetzbaren Materials vorliegt.

4. Elastomerzusammensetzung nach mindestens einem der vorangegangenen Ansprüche, bei der das oxidierte Polyethylen bzw. das Copolymer aus Polyethylen und Maleinsäureanhydrid in einer Menge von 20 bis 80 Gew.-% bezogen auf das Gesamtgewicht des vernetzbaren Materials vorliegt.

5. Elastomerzusammensetzung nach mindestens einem der vorangegangenen Ansprüche, bei der die gehärtete Verbindung in Form eines Kraftübertragungsriemens ausgewählt aus der Gruppe bestehend aus Zahnriemen, Keilriemen und Multikeilrippenriemen ausgewählt ist.

6. Elastomerzusammensetzung nach mindestens einem der vorangegangenen Ansprüche, wobei die Zusammensetzung weiterhin einen Füllstoff und/oder eine Verstärkungsfaser einschließt.

7. Elastomerzusammensetzung nach mindestens einem der vorangegangenen Ansprüche, wobei die ungehärtete Zusammensetzung Folgendes umfasst:
(a) ein Ethylen-alpha-Olefinelastomer in einer Menge von 5 bis 99 Gew.-% des gesamten vernetzbaren Materials,
(b) ein oxidiertes Polyethylen bzw. ein Copolymer aus Polyethylen und Maleinsäureanhydrid in einer Menge von 1 bis 95 Gew.-% des gesamten vernetzbaren Materials und
(c) 2 bis 15 phr des organischen Peroxid-Härters.

8. Kraftübertragungsriemen bestehend aus einem Elastomerkörper mit mindestens einer Cord- oder Stoffschicht, **dadurch gekennzeichnet, dass** der Körper eine organische, peroxid-härtbare Elastomerzusammensetzung aus
(a) einem Ethylen-alpha-Olefinelastomer,
(b) einem organischen Peroxid-Härter und
(c) einem oxidierten Polyethylen bzw. einem Copolymer aus Polyethylen und Maleinsäureanhydrid in einer Menge von 1 bis 95 Gew.-% bezogen auf das Gesamtgewicht des vernetzbaren Materials
umfasst.

## Revendications

1. Composition d'élastomère durcissable par un peroxyde organique comprenant :
un élastomère d'éthylène alpha-oléfine, et
un agent de durcissement de type peroxyde organique,
**caractérisée en ce que** la composition contient un polyéthylène oxydé ou un copolymère de polyéthylène et d'anhydride maléique à raison de 1 à 95% en poids du poids total de matériau réticulable.

2. Composition d'élastomère selon la revendication 1, dans laquelle l'élastomère d'éthylène alpha-oléfine est choisi parmi un copolymère d'éthylène propylène diène, un terpolymère d'éthylène propylène diène, ou des mélanges de ceux-ci.

3. Composition d'élastomère selon au moins une des revendications précédentes, dans laquelle le polyéthylène oxydé ou le copolymère de polyéthylène et d'anhydride maléique est présent à raison de 1 à 80% en poids du poids total de matériau réticulable.

4. Composition d'élastomère selon au moins une des revendications précédentes, dans laquelle le polyéthylène oxydé ou le copolymère de polyéthylène et d'anhydride maléique est présent à raison de 20 à 80% en poids du poids total de matériau réticulable.

5. Composition d'élastomère selon au moins une des revendications précédentes, dans laquelle le composé durci est sous la forme d'une courroie de transmission choisie dans le groupe constitué par des courroies crantées, des courroies trapézoïdales, et des courroies trapézoïdales à nervures multiples.

6. Composition d'élastomère selon au moins une des revendications précédentes, dans laquelle la composition comprend en outre une charge et/ou une fibre de renfort.

7. Composition d'élastomère selon au moins une des revendications précédentes, dans laquelle la composition non durcie comprend :
(a) un élastomère d'éthylène alpha-oléfine à raison de 5% à 99% en poids du matériau réticulable total,
(b) un polyéthylène oxydé ou un copolymère de polyéthylène et d'anhydride maléique à raison de 1% à 95% en poids du matériau réticulable total, et
(c) de 2 à 15 phr d'agent de durcissement de type peroxyde organique.

8. Courroie de transmission comprenant un corps élastomère ayant au moins un câble ou une couche de tissu, **caractérisée en ce que** le corps comprend une composition d'élastomère durcissable par un peroxyde organique incluant :
(a) un élastomère d'éthylène alpha-oléfine,
(b) un agent de durcissement de type peroxyde organique, et
(c) un polyéthylène oxydé ou un copolymère de polyéthylène et d'anhydride maléique à raison de 1% à 95% en poids du poids total du matériau réticulable.
